# EUROPÄISCHE PATENTSCHRIFT

(11) **EP 0 537 196 B1**
(45) Veröffentlichungstag und Bekanntmachung des Hinweises auf die Patenterteilung: **24.08.1994**
(21) Anmeldenummer: 91911237.5
(22) Anmeldetag: 14.06.1991
(51) Int. Cl.: F16L 37/08

(54) **STECKKUPPLUNG FÜR DRUCKLUFTLEITUNGEN**
PUSH-IN CONNECTOR FOR COMPRESSED AIR LINES
ACCOUPLEMENT A EMMANCHEMENT POUR CONDUITS D'AIR COMPRIME

(30) Priorität: 04.07.1990 CH 2204/90
(43) Veröffentlichungstag der Anmeldung: 21.04.1993
(73) Patentinhaber: ENSMENGER, Helmut, CH-8840 Einsiedeln (CH)
(72) Erfinder: ENSMENGER, Helmut, CH-8840 Einsiedeln (CH)
(74) Vertreter: Feldmann, Clarence Paul
(86) Internationale Anmeldenummer: EP9101106
(87) Internationale Veröffentlichungsnummer: WO9201188

(56) Entgegenhaltungen:
- DE-B- 2 443 249
- FR-A- 2 620 193

## Beschreibung

Die vorliegende Erfindung betrifft eine Steckkupplung für eine Druckluftleitung, mit einem eine Ringnut aufweisenden Stecker und einer Kupplungsdose , welche eine Einstecköffnung für den Stecker, eine Verriegelungseinrichtung mit Riegelnzum Eingreifen in die Ringnut des Steckers und ein durch Einstecken des Steckers zu öffnendes selbstschliessendes Ventil aufweist, welches unter Federbelastung in einer Hohlmutter axial beweglich gehalten ist, und wobei die Verriegelungsvorrichtung einen Schaltring einen axial verschiebbaren und drehbaren umfasst der die radial beweglich, gehaltene Riegel betätigt.

Eine Steckkupplung der eingangs genannten Art ist aus der DE-B-24′43′249 bekannt. Die dort beschriebene vom gleichen Erfinder entwickelte Steckkupplung, erfüllte die gestellte Bedingungen einer einfachen und sicheren Handhabung, bei der durch ausschliessliche axiale Relativbewegung von Stecker und Kupplungsdose zueinander eine Verriegelung beziehungsweise Entriegelung erzielt wird.

Die Verriegelungseinrichtung bei der bekannten Ausführung besteht dabei aus einem Schaltrohr, in dem mehrere Riegel lagern und einem Schaltring, der auf beiden Stirnflächen mit je einem Zahnkranz ausgerüstet ist. Auf dem oberen Zahnkranz des Schaltringes wirken mehrere Zähne, die an einem Flansch am Schaltring angeordnet sind, während der untere Zahnkranz am Schaltring mit einer Scheibe mit mehreren Zähnen zusammenwirkt. Das Ganze ist in einem Gehäuse gelagert und axial gegen die Kraft einer Druckfeder verschiebbar mittels des einzuschiebenden und in das Schaltrohr eindringenden Steckers betätigbar.

Beim Einschieben muss natürlich der Stecker mit der Aufnahmeöffnung in der Kupplungsdose, das heisst mit der Oeffnung im Schaltrohr fluchtend übereinstimmen. Traf dies nicht zu, so wurde das Schaltrohr durch den verkantenden Stecker axial bewegt und der Schaltring führte einen Schaltschritt durch, so dass die Riegel in der Sperrlage gerieten. Nun war die Kupplungsdose verriegelt und der Stecker liess sich nicht mehr einschieben. Zur Entriegelung musste man die ungewollte Fehlschaltung nun gewollt wiederholen, um den Schaltring um eine Teilung weiter zu drehen und damit die Riegel wieder freizugeben.

Es ist folglich die Aufgabe der vorliegenden Erfindung, eine Steckkupplung der eingangs genannten Art derart zu verbessern, dass Fehlschaltungen ausgeschlossen sind. Dabei soll die Steckkupplung einfacher und preiswerter in der Montage und Fertigung sein.

Diese Aufgabe löst eine Steckkupplung der eingangs genannten Art mit den Merkmalen des Patentanspruches 1.

Weitere vorteilhafte Ausführungsformen gehen aus den abhängigen Patentansprüchen hervor und deren Bedeutung ist in der nachfolgenden Beschreibung erläutert.
In der Zeichnung ist ein Ausführungsbeispiel des Erfindungsgegenstandes dargestellt.

Es zeigt:

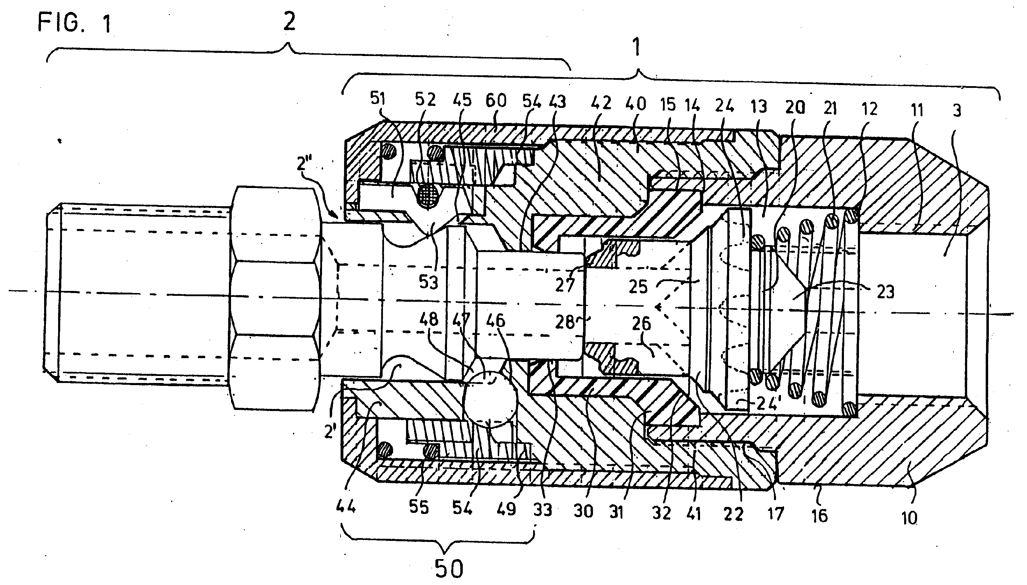

- Figur 1: eine Schnittzeichnung durch die Steckkupplung, wobei der Stecker in Ansicht und das Ventil im Schnitt erkennbar ist ;
- Figur 2: eine Abwicklung des Schaltringes mit den verschiedenen Zahnkränzen und dem Schaltkranz am Schaltrohr;
- Figur 3: zeigt eine Aufsicht auf die Einstecköffnung der Kupplungsdose ohne Ueberwurfmutter in der sperrenden und
- Figur 4: in der freien Schaltlage.

In der Zeichnung ist ein Ausführungsbeispiel der erfindungsgemässen Steckkupplung für Druckluftleitungen in gekoppeltem Zustand dargestellt. Dabei ist natürlich die eigentliche Erfindung in der Kupplungsdose 1 zu sehen und nicht im standarisierten Stecker 2. Sowohl der Stecker 2, wie auch die Schraubverbindung an der Druckluftleitung sind normiert. Um die erfindungsgemässe Steckkupplung somit zu verwenden, genügt es bei den bestehenden Steckkupplungen die Kupplungsdose auszuwechseln. Da die Stecker 2 normiert sind, müssen die Kupplungsdosen den Maßen des Steckers angepasst sein. Dies betrifft insbesondere die Steckerlänge, den Steckerdurchmesser, der den Durchmesser der Einstecköffnung 2˝ festlegt und schliesslich die Geometrie der Ringnut 2′, die der Verriegelung des Steckers in der Kupplungdose 1 dient.

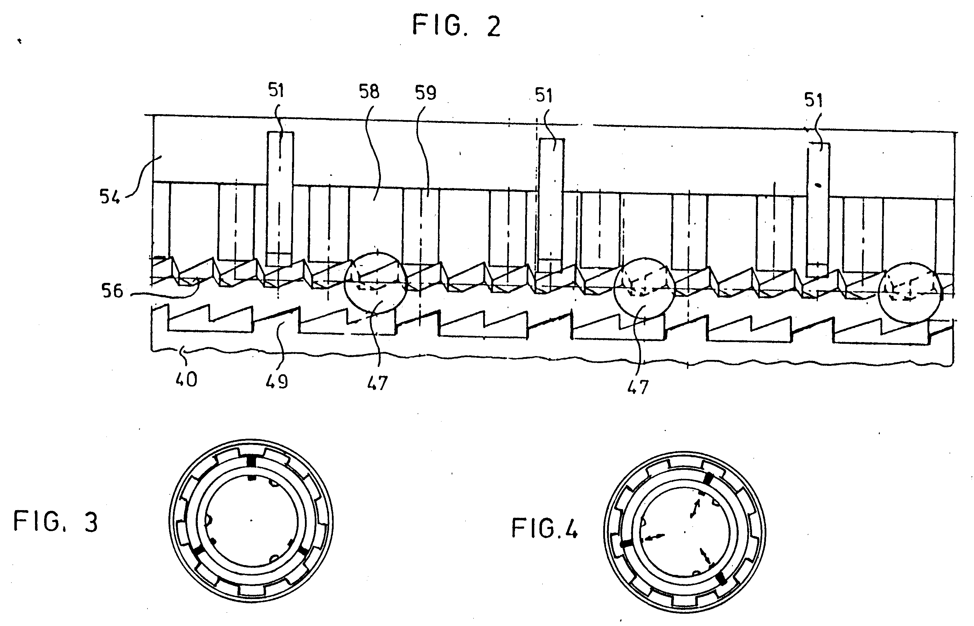

Nachfolgend wird die Kupplungsdose 1 von der Eingangsseite zur Ausgangsseite hin im Detail beschrieben. Der eigentliche Schaltmechanismus der Kupplungsdose wird danach anhand der Figuren 2-4 erklärt. Die Eingangsseite der Kupplungsdose 1 bildet die Drucklufteingangsöffnung 3. Die Drucklufteingangsöffnung 3 wird von einer Hohlmutter 10 gebildet. Der Innendurchmesser der Hohimutter 10 erweitert sich von der Eingangsseite zur Ausgangsseite hin in drei Stufen und bildet dabei zwei Schultern. Den geringsten Innendurchmesser der Hohlmutter 10 bildet die eigentliche Drucklufteingangsöffnung 3. Diese ist mit einem Innengewinde 11 versehen, welches der Schraubverbindung mit einer Druckluftleitung dient. Auf der ersten Schulter 12, der Hohlmutter 10 stützt sich eine spiralförmige Druckfeder 21 ab, die Teil eines selbsttätigen Ventiles 20 ist. In diesem erweiterten Teil 13 der Hohlmutter 10 ist das selbsttätige Ventil 20 gleitend gelagert. Eine zweite Schulter 14 bildet den Uebergang zur Erweiterung 15. Dieser Teil 15 der Hohlmutter 10 weist den grössten Innendurchmesser auf. In der Erweiterung 15 sitzt passend eine Dichtbuchse 30 aus gummielastischem Material. Die Dichtbuchse. 30 hat einen Kragen 31, der gleich breit ist, wie die Erweiterung 15 lang ist. Die Aussenfläche 16 der Hohlmutter 10 ist als Sechskantmutter geformt. Eingangsseitig ist die Sechskantmutter 16 sowohl innen als auch aussen angefast. Ausgangsseitig ist jedoch die Mutter auf einen geringeren Durchmesser abgedreht und mit einem Aussengewinde 17 versehen.

Das selbsttätige Ventil 20 besteht aus der bereits beschriebenen Druckfeder 21 und dem eigentlichen Ventilkörper 22 Der Ventilkörper 22 hat einen zur Drucklufteingangsöffnung 3 hin gerichteten Haltezapfen 23, auf dem die Druckfeder 21 gehalten ist. Der weiteste Teil des Ventilkörpers 22 bildet ein konischer Kragen 24. Dieser hat an seinem Umfang verteilt mehrere Einbuchtungen 24′, damit die Druckluft den Ventilkörper 22 umströmen kann. In der Strömungsrichtung betrachtet, folgt dem konischen Kragen 24 ein Dichtungskonus 25. Anschliessend an den Dichtungskonus 25 hat der Ventilkörper 22 einen zylindrischen Teil, der innen hohl ist und zwei einander radial gegenüberliegende Luftdurchtrittsöffnungen 26 aufweist. Luftaustrittsseitig ist der Ventilkörper 22 mit einem Druckaufnahmering 27 versehen. Auf diesen Druckaufnahmering 27 wirkt bei jeder Betätigung der Steckkupplung der Stecker 2.
In gekoppeltem Zustand strömt die Druckluft durch die Drucklufteingangsöffnung 3 durch die Druckfeder 21 hindurch, um den Haltezapfen 23 in den erweiterten Teil 13 der Hohlmutter 10. Von hier gelangt die Druckluft durch die Ausnehmungen 24′ im konischen Kragen 24 in den dahinter liegenden Bereich des erweiterten Teiles 13 der Hohlmutter 10 und kann von hier durch die Luftdurchtrittsöffnungen 26 im Ventilkörper 22 und von diesen durch die Austrittsöffnung 28, welche Oeffnung durch den Druckaufnahmering 27 gebildet ist, in den Stecker 2 einströmen.

Befindet sich der Stecker 2 nicht in der Kupplungsdose 1, so drückt der Stecker 2 auch nicht auf den Druckaufnahmering 27 und folglich kann die Druckfeder 21 den Ventilkörper 22 zur Austrittsöffnung hin schieben, so dass der Dichtungskonus 25 an die entsprechend gefaste Fläche 32 der Dichtbuchse 30 dichtend aufliegen kann. Zur Dichtung trägt nun auch der Druck der anliegenden Druckluft bei.

Auf das Aussengewinde 17 der Hohlmutter 10 ist ein Schaltrohr 40 aufgeschraubt. Dieses relativ komplizierte Gebilde kann aus Metall oder Kunststoff sein. Der Ausdruck Schaltrohr ist in diesem Zusammenhang verwirrend, weil es nicht, wie bei der früher bekannten Lösung zur Schaltung der Verriegelung bewegt wird sondern lediglich noch die Elemente aufnimmt, die zur Schaltung der Verriegelung dienen. Anschliessend an den Bereich 41 des Schaltrohres 40, welches mit dem Aussengewinde 17 der Hohlmutter 10 zusammenpasst, kommt ein zylindrischer Teil 42, in den die Dichtbuchse 30 eingeschoben und gehalten ist. Die Durchgangsbohrung 43 des Schaltrohres 40 fluchtet genau mit der entsprechenden Durchgangsöffnung 33 in der Dichtbuchse 30. Anschliessend folgt ein mit erweitertem Innendurchmesser versehener zylindrischer Teil 44, der relativ dickwandig ist. Dieser zylindrische Teil 44 des Schaltrohres 40 erstreckt sich bis zur Aussenseite der Kupplungsdose. In diesem zylindrischen Teil 44 des Schaltrohres 40 ist die Verriegelungseinrichtung 50 untergebracht. Diese Verriegelungseinrichtung 50 umfasst mehrere, in diesem Fall, drei Stück Riegel 51, die in drei radial verlaufenden Längsnuten im Schaltrohr 40 lagern und mit einem sie umgreifenden O-Ring 52 in diesen Nuten gehalten sind. Die Riegel 51 haben Nasen 53, die durch Durchbrüche 45 im zylindrischen Teil 44 des Schaltrohres 40 in den Innenraum ragen, durch den der Stecker 2 eingeführt wird. Die Nasen 53 der Riegel 51 greifen in die Ringnut 2′ des Steckers 2 ein, wenn dieser korrekt in die Kupplungsdose 1 eingeschoben ist. Der zylindrische Teil 44 weist an seinem unteren Ende Aufnahmehöhlen 46 zur Aufnahme von Schaltkugeln 47 auf. Die Schaltkugeln 47 in den Aufnahmehöhlen 46 ragen durch Fenster 48 in den Steckeraufnahmeraum hinein. Beim Eindrücken des Steckers 2 in die Einstecköffnung 2′ werden die Schaltkugeln 47 von einer Schulter des genormten Steckers radial nach aussen gedrückt. Hierbei wirken die Schaltkugeln 47 auf einen relativ kompliziert geformten Schaltring 54, der hierbei gegen den Druck einer Schaltfeder 55 zur Einstecköffnung 2′ hin bewegt wird. Der Schaltring 54, der drehbar und axial verschiebbar auf dem zylindrischen Teil 44 des Schaltrohres 40 gelagert ist, hat einen sägezahnförmigen Verzahnung 56, die auf einer Rätschenverzahnung 49 des Schaltrohres 40 aufliegt. Die sägezahnförmige Verzahnung 56 sperrt den Schaltring 54 in der entsprechenden Schaltlage. Beim Einschieben des Steckers 2 drängt dessen Schulter die Schaltkugeln 47 nach aussen auf die dreidimensionale gewölbte Rätschenverzahnung 49 des Schaltrohres. Die Schaltkugeln 47 heben dabei den Schaltring 54 in axialer Richtung an und verdrehen durch ihr Auflaufen auf die Verzahnung 56 des Schaltringes diesen zugleich um einen halben Schaltschritt. Beim Rückziehen des Steckers 2 senkt sich der Schaltring 54 bis dessen Verzahnung 56 auf die Verzahnung 49 des Schaltrohres auftrifft, wobei der Schaltring um einen weiteren halben Schaltschritt gedreht wird. Nun liegen die radial nach innen gerichtete Rippen 58 am Schaltring 54 genau über den Riegeln 51, so dass diese nicht mehr radial nach aussen sich bewegen können. Folglich ist nun der Stecker 2 in der Kupplungsdose 1 verriegelt gehalten. Durch einen weiteren axialen Druck des Steckers 2 in die Kupplungsdose hinein, wirkt wiederum die. Schulter des Steckers auf die Schaltkugeln 47 und diese verschieben wiederum durch ihre Radialbewegung den Schaltring 54 um eine weitere Verzahnung, wobei die Ratschenverzahnung 49 mit dem sägezahnförmigen Zahnkranz 56 um einen Zahn springt. In der neuen Lage liegen die Riegel 51 genau über nutenförmigen Ausnehmungen 59, so dass die Riegel 51 sich nun wiederum radial nach aussen federnd bewegen lassen. Die Federwirkung wird dabei durch den O-Ring 52 bewirkt. In dieser neuen Lage lässt sich der Stecker 2 aus der Kupplungsdose 1 herausziehen. Diese beiden Situationen sind in den Figuren 3 und 4 nochmals vereinfacht dargestellt. Sichtbar ist dies dann, wenn man die das Schaltrohr 40 umgreifende Ueberwurfmutter 60 abschraubt. Die auf den Schaltring 54 der Verriegelungseinrichtung 50 wirkende Druckfeder 55 stützt sich in der Ueberwurfmutter 60 stirnseitig auf der Innenseite auf.

## Patentansprüche

1. Steckkupplung für eine Druckluftleitung mit einem eine Ringnut (2′) aufweisenden Stecker (2) und einer Kupplungsdose (1), welche eine Einstecköffnung für den Stecker (2), eine Verriegelungseinrichtung mit Riegeln (51) zum Eingreifen in die Ringnut (2′) des Steckers und ein durch Einstecken des Steckers zu öffnendes, selbstschliessendes Ventil (20) aufweist, welches unter Federbelastung in einer Hohlmutter (10) axial beweglich gehalten ist und wobei die Verriegelungseinrichtung (50) einen axial verschiebbaren und drehbaren Schaltring (54) umfasst, der die radial beweglich gehaltenen Riegel (51) betätigt, wobei der Schaltring (54) auf einem in der Kupplungsdose (1) fest angeordneten Schaltrohr (40) gelagert ist und im Schaltrohr Höhlen (46) angeordnet sind, in denen Schaltkugeln (47) lagern, die durch Fenster (48) in die Einstecköffnung für den Stecker (2) hineinragen, so dass diese Kugeln beim Einstecken des Steckers (2) in die Kupplungsdose radial nach aussen geschoben werden, auf eine rätschenförmige Schrägverzahnung (49) des Schaltrohres (40) auflaufen und dabei in die Verzahnung (56) des Schaltringes (54) eingreifen, den Schaltring anheben ihn um einen halben Schaltschritt weiter drehen, der bei geringfügigem Zurückziehen des Steckers zu einem ganzen Schaltschritt ergänzt wird, wodurch der Schaltring (54) von einer die Riegel (51) sperrende Lage in eine dieselben freigebende Lage, oder umgekehrt, gelangt.

2. Steckkupplung nach Anspruch 1, dadurch gekennzeichnet, dass die Schaltkugeln (47) im hinteren Endbereich der Einstecköffnung (2˝) angeordnet sind.

3. Steckkupplung nach Anspruch 1, dadurch gekennzeichnet, dass das Schaltrohr (40) eine Aufnahme (42) hat, in dem eine Dichtbuchse (30) bis zu seinem Kragen (31) eingeschoben ist, wobei der Kragen (31) eine gefaste Fläche (32) aufweist, die mit einem Dichtungskonus (25) am Ventilkörper (22) zusammenwirkt, und wobei die Dichtbuchse (30) eine Durchgangsöffnung (33) aufweist, welche dem Stecker (2) angepasst ist und im gekoppelten Zustand dichtend an diesen anliegt.

4. Steckkupplung nach Anspruch 1, dadurch gekennzeichnet, dass das selbsttätige Ventil (20) eine Druckfeder (21) umfasst, die sich auf einer ersten Schulter (12) in der Hohlmutter (10) abstützt und an einem Haltezapfen (23) am Ventilkörper (22) gehalten ist.

5. Steckkupplung nach anspruch 4, dadurch gekennzeichnet, dass der Ventilkörper (22) aus Kunststoff hergestellt ist und mit einem Druckaufnahmering (27) verstärkt ist.

6. Steckkupplung nach Anspruch 1, dadurch gekennzeichnet, dass auf das Schaltrohr (40) eine Ueberwurfmutter (60) geschraubt ist, in der eine auf den Schaltring (54) wirkende Druckfeder (55) lagert.

7. Steckkupplung nach Anspruch 1, dadurch gekennzeichnet, dass die Riegel (51) mittels eines gummielastischen O-Ringes (52) in entsprechenden Aufnahmeschlitzen im Schaltrohr (40) gehalten sind.

## Claims

1. Plug-in coupling for a compressed-air line with a connector (2) having an annular groove (2′), and with a socket (1) which has a plug-in orifice for the connector (2), a locking device with locking pieces (51) to engage in the annular groove (2′) of the connector and a self-closing valve (20) which is opened by insertion of the connector, which valve is held movably in the axial sense under spring loading in a hollow nut (10), the locking device (50) including an axially displaceable and rotatable ratchet ring (54) which actuates the radially movable locking pieces (51), the ratchet ring (54) running on a ratchet tube (40) fixed into the socket (1), and cavities (46) being located in the engaging tube, in which cavities ratchet balls (47) are housed, which balls project through openings (48) into the plug-in orifice for the connector (2), so that when the connector (2) is plugged into the socket these balls are pushed radially outwards, run up a ratchet-shaped oblique denticulation (49) of the ratchet tube (40) and thus engage in the denticulation (56) of the ratchet ring (54), lift the ratchet ring and rotate it half a ratchet-step further, which is extended to a full ratchet step by a slight withdrawal of the connector, whereby the ratchet ring (54) moves from a position which blocks the locking pieces (51) to a position which releases the locking pieces, or inversely.

2. Plug-in coupling according to Claim 1, characterised in that the ratchet balls (47) are located in the rear end zone of the plug-in orifice (2˝).

3. Plug-in coupling according to Claim 1, characterised in that the ratchet tube (40) has a seat (42) into which a sealing busch (30) is inserted up to its collar (31), the collar (31) having a chamfered face (32) which works in cooperation with a sealing cone (25) on the valve body (22), and the sealing bush (30) having a passage (33) matched to the connector (2) and fitting closely around it to form a seal in the coupled state.

4. Plug-in coupling according to Claim 1, characterised in that the self-actuating valve (20) includes a compression spring (21) which rests on a first shoulder (12) in the hollow nut (10) and is retained by a retaining plug (23) on the valve body (22).

5. Plug-in coupling according to Claim 4, characterised in that the valve body (22) is made of plastic and is reinforced by a pressure absorbing ring (27).

6. Plug-in coupling according to Claim 1, characterised in that a union nut (60), in which a compression ring (55) acting on the ratchet ring (54) is housed, is screwed on to the ratchet tube (40).

7. Plug-in coupling according to Claim 1, characterised in that the locking pieces (51) are retained in matching seating slots in the ratchet tube (40) by means of a resilient rubber O-ring (52).

## Revendications

1. Accouplement à emmanchement pour un conduit à air comprimé, comprenant une partie mâle (2) munie d'une gorge annulaire (2′), et une partie femelle d'accouplement (1) qui présente un orifice d'emboîtement pour la partie mâle (2), un dispositif de verrouillage doté de verrous (51) conçus pour s'engager dans la gorge annulaire (2′) de la partie mâle, et une soupape (20) à fermeture automatique, devant être ouverte par emboîtement de la partie mâle et retenue avec mobilité axiale, par la sollicitation d'un ressort, dans un bouchon creux taraudé (10), le dispositif de verrouillage (50) englobant une bague sélectrice (54) pouvant coulisser et tourner dans le sens axial, et actionnant les verrous (51) retenus avec mobilité radiale, la bague sélectrice (54) étant montée sur un tube sélecteur (40) disposé de manière fixe dans la partie femelle d'accouplement (1), et l'espace interne du tube sélecteur comportant des cavités (46) dans lesquelles sont logées des billes de sélection (47) qui s'engagent, à travers des fenêtres (48), dans l'orifice d'emboîtement destiné à la partie mâle (2), de sorte que, au stade de l'emboîtement de la partie mâle (2) dans la partie femelle d'accouplement, ces billes sont poussées radialement vers l'extérieur, montent sur une denture oblique (49) en forme de rochet, ménagée sur le tube sélecteur (40), pénètrent alors dans la denture (56) de la bague sélectrice (54), soulèvent ladite bague sélectrice et lui impriment une rotation supplémentaire d'un demi-pas de sélection qui est complété, lors d'une légère rétraction de la partie mâle, pour former un pas de sélection complet, si bien que la bague sélectrice (54) parvient d'une position bloquant les verrous (51) à une position libérant ces derniers, ou inversement.

2. Accouplement à emmanchement selon la revendication 1, caractérisé par le fait que les billes de sélection (47) sont disposées dans la région extrême postérieure de l'orifice d'emboîtement (2˝).

3. Accouplement à emmanchement selon la revendication 1, caractérisé par le fait que le tube sélecteur (40) présente un logement (42) dans lequel une douille d'étanchement (30) est insérée jusqu'à sa collerette (31), la collerette (31) comportant une surface biseautée (32) qui coopère avec un cône d'étanchement (25) ménagé sur le corps obturateur (22), la douille d'étanchement (30) étant percée d'une ouverture de passage (33) qui est adaptée à la partie mâle (2) et est appliquée contre cette dernière, à l'état accouplé, en assurant l'étanchéité.

4. Accouplement à emmanchement selon la revendication 1, caractérisé par le fait que la soupape automatique (20) renferme un ressort de pression (21) qui prend appui sur un premier épaulement (12) façonné dans le bouchon creux taraudé (10), et est retenu sur un tenon d'arrêt (23) solidaire du corps obturateur (22).

5. Accouplement à emmanchement selon la revendication 4, caractérisé par le fait que le corps obturateur (22) est fabriqué en matière plastique et est renforcé par une bague (27) absorbant la pression.

6. Accouplement à emmanchement selon la revendication 1, caractérisé par le fait qu'un capuchon taraudé (60), dans lequel est logé un ressort de pression (55) agissant sur la bague sélectrice (54), est vissé sur le tube sélecteur (40).

7. Accouplement à emmanchement selon la revendication 1, caractérisé par le fait que les verrous (51) sont retenus, au moyen d'un joint torique (52) doué de l'élasticité du caoutchouc, dans des fentes réceptrices correspondantes pratiquées dans le tube sélecteur (40).
